# EUROPEAN PATENT APPLICATION

(11) **EP 2 159 993 A1**
(43) Date of publication of application: **03.03.2010**
(21) Application number: 07745504.6
(22) Date of filing: 19.06.2007
(51) Int. Cl.: H04L 29/10

(54) **PACKET PROCESSOR, FRAME CONTROL METHOD, AND COMMUNICATION DEVICE**

(71) Applicant: Fujitsu Limited, Kawasaki-shi, Kanagawa 211-8588 (JP)
(72) Inventor: SAITO, Miyoshi, Kawasaki-shi Kanagawa 211-8588 (JP)
(74) Representative: Lewin, David Nicholas
(86) International application number: PCT/JP2007/062285
(87) International publication number: WO 2008/155814

(57) **Abstract**

A packet processing device for controlling a frame having a plurality of data blocks including a plurality of packets constituted by a control packet including control data or a data packet including data, the packet processing device includes: a packet processor for receiving the frame and accumulating the frame; and a controller for processing the packet transmitted from the packet processor, wherein the packet processor transmits data to the controller at a timing when the packet is finished till the control packet is received, and the packet processor transmits the data at a timing when the data block is finished after the control packet is received.

## Description

### Technical Field

The present invention relates to a packet processing device or a communication device provided between an upper layer device and a lower layer device. For example, the present invention is preferably applied to a wireless device (base station and mobile terminal) used for WiMAX, IEEE802.6, or the like.

### Background Art

There has been known a packet communication using an orthogonal frequency division multiples (OFDM) or an orthogonal frequency division multiple access (OFDMA). As an example, the packet communication is used in a device using a standard such as IEEE802.16, WiMAX.

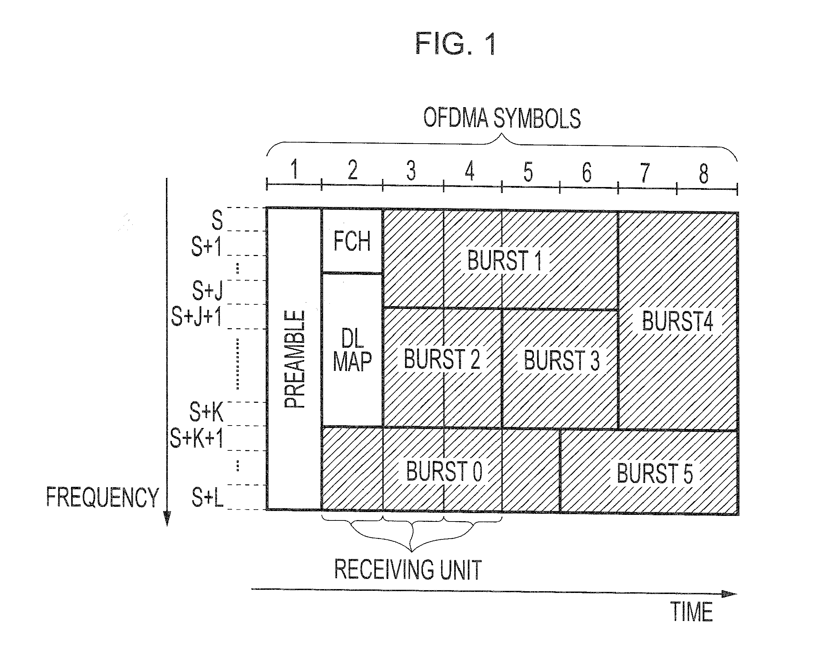

FIG. 1 is a diagram illustrating an example of the structure of a frame in a downlink in an OFDMA of WiMAX. The frame has a frequency axis and a time axis. The frequency axis is constituted by a plurality of subcarriers. In FIG. 1, S to S+L are data channels corresponding to the plurality of subcarriers of the ODFMA. When the data of a third symbol of the OFDMA is viewed along the frequency axis, the subcarriers of S to S+J become first burst data (Burst 1), the subcarriers of S+J+1 to S+k become second burst data (Burst 2), and the subcarrier of S+K+1 to S+k+L become third burst data (Burst 0). The time axis of the frame is constituted by a plurality of symbols. In FIG. 1, one frame is constituted by 8 symbols.

The frame is constituted by a plurality of burst data besides control information of a PREAMBLE, a frame control header (FCH), and a downlink map (DL-MAP). Herein, The FCH is information that controls the frame of a downlink. The DL-MAP is information of time at which burst data is started for a time division multiplexing (TDM) and a time division multiple access on a downlink. The burst data includes a plurality of packets (control MAC-PDUs and data MAC-PDUs) in the frame that are integrated into one unit. The length of burst data is variable. Accordingly, there is no regularity in the time at which the burst data is ended. The FCH, the DL-MAP, and the burst data areas arranged in parallel in a plurality of subcarriers, and a plurality of burst data are arranged at the same reception timing (unit of symbol). For example, in the case of FIG. 1, reception of burst data (Burst 0) starts at OFDMA symbol 2. At the next OFDMA symbol 3, burst data (Burst 0, 1, 2) are received in parallel. Also in OFDMA symbol 4, burst data (Burst 0, 1, 2) are received in parallel. However, reception of burst data (Burst 2) is finished. In OFDMA symbol 5, burst data (Burst 0, 1) are received in parallel, and reception of burst data (Burst 3) is started.

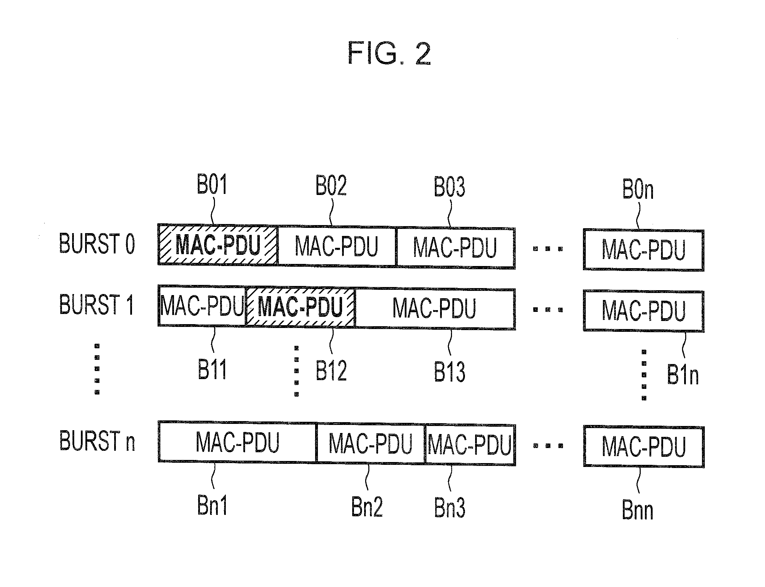

FIG. 2 illustrates the structure in the burst data. Control information and user data are mixed in the burst data. In the case of WiMAX, both of the control information and user data become data units of MAC-PDU. There is not regulation for the position of a control information MAC-PDU in burst data. However, when there is a UL-MAP which is one of control information, it is regulated that the UL-MAP is arranged at the head of the burst data (Burst 0). However, the arrangement is different depending on a control of a base station, and there is a case that the UL-MAP is not arranged at the head of burst data (Burst 0). However, since it is necessary to execute a control a packet or data of a post-stage, the UL-MAP is arranged around the head of the burst data. In FIG. 2, a control information MAC-PDU equipped with control information is B01 of burst data (Burst 0) and B12 of burst data (Burst 1). Other MAC-PDUs (for example, B02, B03, B0n B11, B13, B1n, Bn1, Bn2, Bn3, Bnn) are user data. In FIG. 2, there is a control information MAC-PDU in the burst data (Burst 0) and burst data (Burst 1). However, there is no control information MAC-PDU in burst data (Burst n). That is, there is a control information MAC-PDU in a part of burst data.

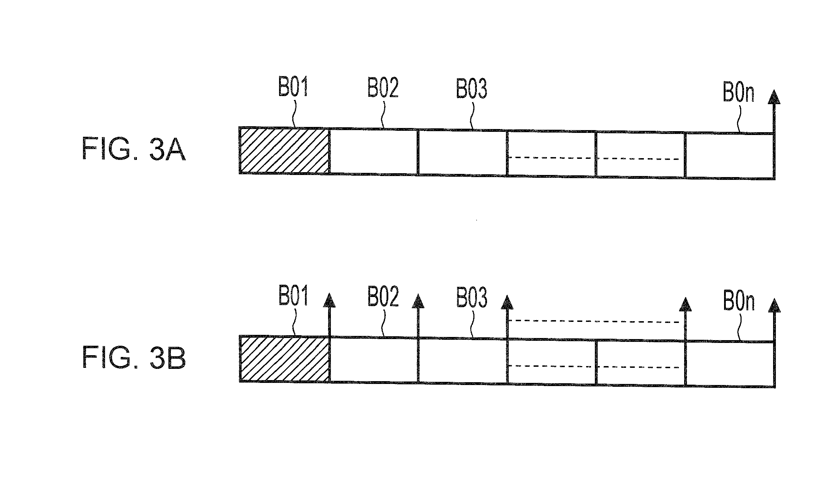

A data processing of burst data in the frame received by a packet processing device or a communication device from a lower layer device is executed by a controller (CPU) that is an upper layer device. Timings of the data processing in the CPU are illustrated in FIGs. 3A and 3B. FIGs. 3A and 3B illustrate timings at which burst data 0 of FIG. 2 is processed by the CPU. Arrows of FIG. 3A and 3B illustrate timings that the data in the frame stored in a memory is processed by the CPU.

The case that the CPU executes a processing of data by the burst data unit is illustrated in FIG. 3A. In FIG. 3A, a control MAC-PDU exists in MAC-PDU B01. However, since the data processing is executed by the burst data unit, the timing that the data processing is executed by the CPU is the time when reception of the burst data (Burst 0) is finished. That is, although the control MAC-PDU exists at the head B01 of the burst data, the data processing by the CPU is executed after the timing (B0n) at which reception of the burst data is finished. It is necessary for the CPU to receive a control MAC-PDU as early as possible for the following processing. However, when data is processed by the burst data unit, the CPU cannot start the processing till the entire burst data is received. In the worst case, there is also a case that a control MAC-PDU is received at the last frame. Accordingly, in the method, there is a case that the timing at which a processing of a control MAC-PDU is started is delayed and the processing is not executed within a time limit regulated in a mutual communication between network devices (for example, between a wireless base station and a terminal).

The case that the CPU executes a processing of data by the MAC-PDU unit is illustrated in FIG. 3B. In FIG. 3B, notification of reception of data is executed to the CPU when data is collected by the MAC-PDU unit in each burst data. Herewith, a control MAC-PDU that exists around the head in the burst data can be provided fast to the CPU, so that the time limit over caused by delay of starting of the processing of the control MAC-PDU does not occur. However, there arises another difficulty in the method. Since there is no upper limit in the number of MAC-PDU included in each burst data, when there is a number of MAC-PDU, a lot of notifications to the CPU occur. In this case, the CPU has to take a time in the receiving processing of the notifications. As a result, the processing for the communication between network devices may not be finished in a time limit to prevent the communication.

Japanese Laid-open Patent Publication No. 2000-115194 is known as a technique for controlling a packet.

### Disclosure of Invention

### Technical Problem

The object of the invention is to make consideration of the load of an upper layer device generated by supplying data to the upper layer device and to convey control data fast to the upper layer device in a packet processing device or a communication device.

### Technical Solution

Accordingly, it is an object of the present invention to provide a packet processing device or a communication device that receives a packet including control data required for a transmission control and a data block including another packet, and provides the packet obtained by a reception processing of the data block to an upper layer device. The communication device includes a reception data supply unit that changes the unit of data to be supplied to the upper layer device after the packet including the control data is supplied to the upper layer device.

### Advantageous Effects

According to the invention, the load of a control device that executes a data processing in a frame can be reduced, and a processing for communication between network devices can be finished within a time limit.

### Brief Description of Drawings

FIG. 1 is a diagram illustrating the structure of a frame in a downlink;
FIG. 2 is a diagram illustrating the structure in burst data;
FIGs. 3A and 3B are each a diagram illustrating a timing of a data processing;
FIG. 4 is a diagram illustrating the structure of a packet processing device according to a first embodiment;
FIG. 5 is a state transition diagram of communications between a CPU and a packet processor according to the first embodiment;
FIGs. 6A and 6B are each a diagram illustrating a timing for executing a reception completion notification;
FIG. 7 is a diagram illustrating the structure of a packet processing device according to a second embodiment;
FIG. 8 is a diagram illustrating a MAC-PDU notification accumulation register.
FIG. 9A illustrates a valid MAC-PDU notification register, and FIG. 9B illustrates a valid burst data notification register;
FIG. 10 is a diagram illustrating an IRQ notification control register; and
FIG. 11 is a state transition diagram of communications between a CPU and a packet processor according to the second embodiment.

### Explanation of Reference

1: controller (CPU)
2: packet processor (broad band hardware: BB-HW)
3: wireless signal processing unit
4: memory
5: bus
6: burst notification control register
7: MAC-PDU notification control register
8: IRQ output controller
9: CPU interface
10: data controller
11: valid MAC-PDU notification control register
12: valid burst notification control register
131, 132 ···13n: MAC-PDU information accumulation register
14: frame end register
15: frame start register

### Best Modes for Carrying Out the Invention

Hereinafter, embodiments of the invention will be described with reference to the drawings. The structures of the embodiments are examples, and the structures of the invention are not limited to the structures of the embodiments.

Before describing the embodiments, the structure of a frame that is processed by a packet processing device or a communication device will be defined in the following.

A frame has the structure of FIG. 1 described above. A plurality of channels in the frame correspond to subcarriers of OFDMA. Burst data in the frame is constituted by a plurality of packets. Since there is a unit of a plurality of packets in burst data, the unit is also referred to as a packet unit or a data block. The packet indicates a MAC-PDU. The packet has two types, a control packet and a data packet. The control packet means UL-MAP information provided in a control MAC-PDU. The UL-MAP information is a standard of WiMAX or the like, and included when a wireless base station executes a transmission to a terminal. As a concrete example, the UL-MAP information includes a transmission timing of a terminal and assignment information of a channel in the frame.

In the embodiments, a control MAC-PDU shall include a DL-Map and a UL-Map. A data packet means a MAC-PDU except a control MAC-PDU. Burst data includes at least a data packet (there is a case that burst data does not include a control packet). The burst data are arranged in a plurality of data channels in parallel in a frame.

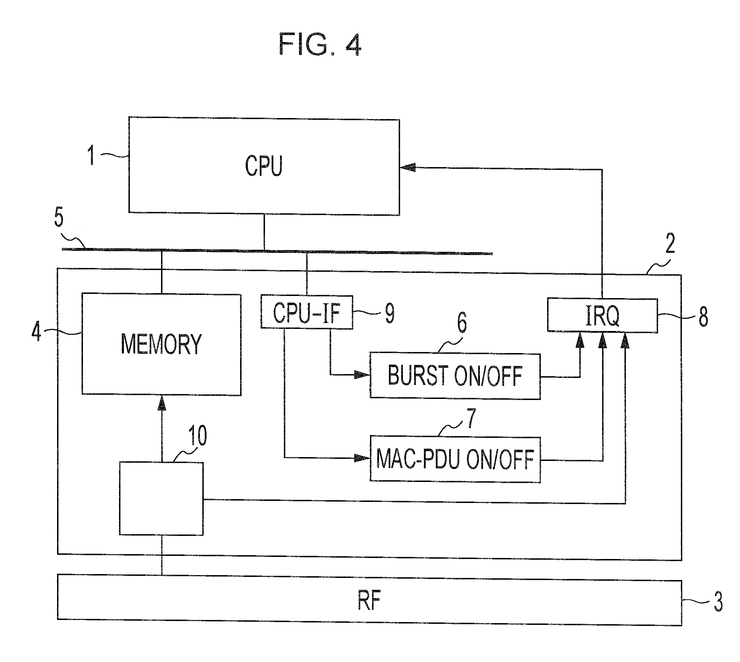

It is preferable that a first embodiment and a second embodiment be applied to a terminal that executes a communication with a wireless base station with the standard of WiMAX or the like. Hereinafter, the first embodiment will be described with reference to FIGs. 4 to 6B.

### Structure of Packet Processing Device of First Embodiment

In FIG. 4, reference numeral 1 denotes a controller (CPU), 2 denotes a packet processor (broad band hardware: BB-HW), 3 denotes a wireless signal processing unit, 4 denotes a memory, 5 denotes a bus. In FIG. 4, a packet processing device of the first embodiment includes the controller 1, the bus 5, and the packet processor 2.

### BUS

The Bus 5 connects the CPU 1 and the packet processor 2, and transmits data from the packet processor 2 to the CPU 1. The wireless processing unit 3 demodulates a received wireless signal, converts into digital data, and transmits a frame to the packet processor 2. The packet processor 2 receives the data of the frame from the wireless processing unit 3, and stores the data of the frame in the memory 4 in the packet processor 2 as burst data. Further, the packet processor 2 transmits predetermined data to the CPU 1 via the bus 5 based on an order from the CPU 1. The CPU 1 controls the packet processor 2 to receive burst data from the packet processor 2 via the bus 5, and executes an analysis of the burst data.

### Packet Processing Unit

The packet processor (broad band hardware: BB-HW) 2 is equipped in a packet processing device or a communication device. The packet processor 2 is equipped with a burst notification control register 6, a MAC-PDU notification control register 7, an IRQ output controller 8, a CPU interface 9, a data controller 10, and the memory 4.

The data controller 10 receives data of the frame form the wireless communication unit 3. Further, the data controller 10 writes the received data in the memory 4 and notifies the IRQ output controller 8 of a reception state of the data. The reception state of data herein means (1) start of reception of a frame, (2) completion of reception of a MAC-PDU, (3) completion of reception of burst data, (4) completion of reception of a frame.

### Wireless Signal Processing Unit

The wireless signal processing unit 3 is a lower layer device of the packet processor 2. The wireless signal processing unit 3 receives a frame arranged in a frequency corresponding to the channel of FIG. 1 from an opposing wireless station as a reception signal. Further, the wireless signal processing unit 3 demodulates the reception signal. Then, the demodulated reception signal becomes decoded data, and transmitted to the packet processor 2.

### CPU Interface

When a request is received from the CPU1, the CPU interface 9 sets a flag corresponding to the content of the request in the MAC-PDU notification control register 7 and the burst notification control register 6.

### IRQ Output Control Unit

The IRQ output controller 8 receives a reception completion of burst data and a reception completion of a MAC-PDU from the data controller 10. Then, the IRQ output controller 8 transmits the reception state of the data of the aforementioned (1) to (4) to the CPU 1 via an interrupt request line based on the flags of the MAC-PDU notification control register 7 and the burst notification control register 6.

### CPU

The CPU 1 is an upper layer device that executes a data processing of burst data. The CPU 1 is connected with the bus 5 and the IRQ output controller 8. The CPU 1 executes a processing of reading MAC-PDU data and burst data based on the notification from the interrupt request line. Further, the CPU 1 analyzes the read data, and transmits information for controlling the IRQ output controller 8 to the burst notification control register 6 and the MAC-PDU notification control register 7 via the CPU interface 9.

The burst notification control register 6, the MAC-PDU notification control register 7, the IRQ output controller 8, the CPU interface 9, the data controller 10 constitute a reception data supply part. The reception data supply part receives a packet including data and a data block including a packet from the wireless processing unit 3 that is a lower layer device, and provides the obtained packet by a reception processing of the data block to the CPU 1 that is an upper layer.

### Operation in Packet Processing Device of First Embodiment

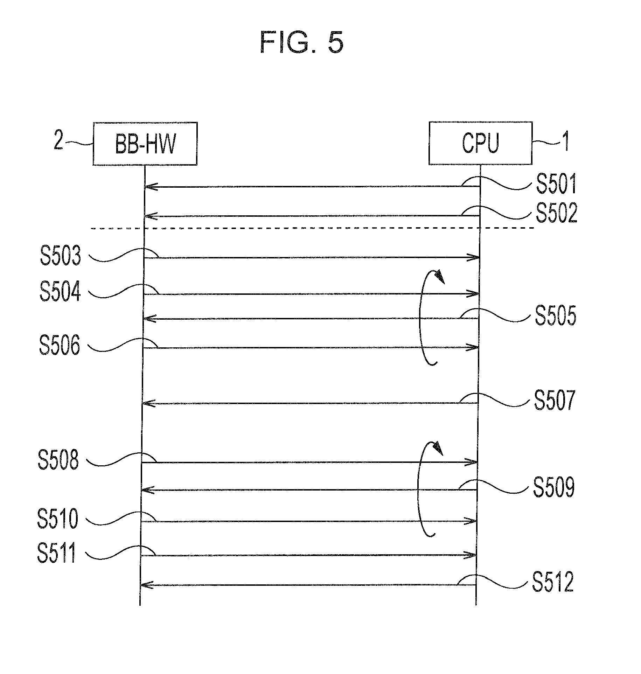

Transmission/reception of burst data between the CPU 1 and the packet processor 2 will be described below with reference to FIG. 5. FIG. 5 is a state transition diagram of a communication between the CPU 1 and the packet processor 2.

As a step for an initialization, step S501 and step S502 are executed. In step S501, the CPU1 sets the packet processor 2 to execute a reception completion notification of data for every burst data (set a flag in burst notification control register 6). In step S502, the CPU 1 sets the packet processor 2 to execute a reception completion notification for every MAC-PDU (set a flag in MAC-PDU notification control register 7). By the setting of step S501 and S502, a notification that reception of data is completed is notified to the CPU 1 from the packet processor 2 by the both units of MAC-PDU and burst data.

Next, steps after reception of a frame are executed. In step S503, when data of a frame is received from the wireless signal processing unit 3, the packet processor 2 notifies the CPU 1 that the reception of the frame is started. In step S504, when the reception a unit of MAC-PDU in the burst data is finished, the packet processor 2 notifies the CPU 1 that reception of the data of MAC-PDU is completed. In step S505, when the notification in step S504 is confirmed, the CPU1 requests the packet processor 2 to read the data of the received MAC-PDU. In step S506, the packet processor 2 transmits the data of the MAC-PDU to correspond to the request from the CPU 1 in step S505. The packet processing device 2 repeats the processing of step S503 to S506 until the CPU 1 analyzes the data of the received MAC-PDU and receives data of a control MAC-PDU necessary for a data processing.

When the data of the received MAC-PDU is analyzed and data of a control MAC-PDU necessary for a data processing is received by the CPU 1, the operation goes to step S507. In step S507, the CPU 1 issues an order that the packet processor 2 stops executing notification of reception by the unit of MAC-PDU (erases the flag of MAC-PDU notification control register 7). When the order is received in step S507, the packet processor 2 stops executing reception completion notification to the CPU 1 by the unit of MAC-PDU, and the operation goes to step S508.

In step S508, when reception of the burst data is completed, the packet processor 2 notifies the CPU 1 that reception of the burst data is completed. In step S509, the CPU 1 requests transmission of the burst data to the packet processor 2. In step S510, the packet processor 2 transmits burst data to the CPU 1. The packet processing device repeats the processing of step S508 to step S510 till reception of the data in the frame is completed.

When reception of the data in the frame is completed, the packet processor 2 executes step S511. In step S511, the packet processor 2 notifies the CPU 1 that reception of the data in the frame is completed. In step S512, the CPU 1 sets the packet processor 2 to execute a reception completion notification for every MAC-PDU. By the step S512, when the next frame is received, the packet processor 2 can execute a reception completion notification of data to CPU 1 by the unit of MAC-PDU.

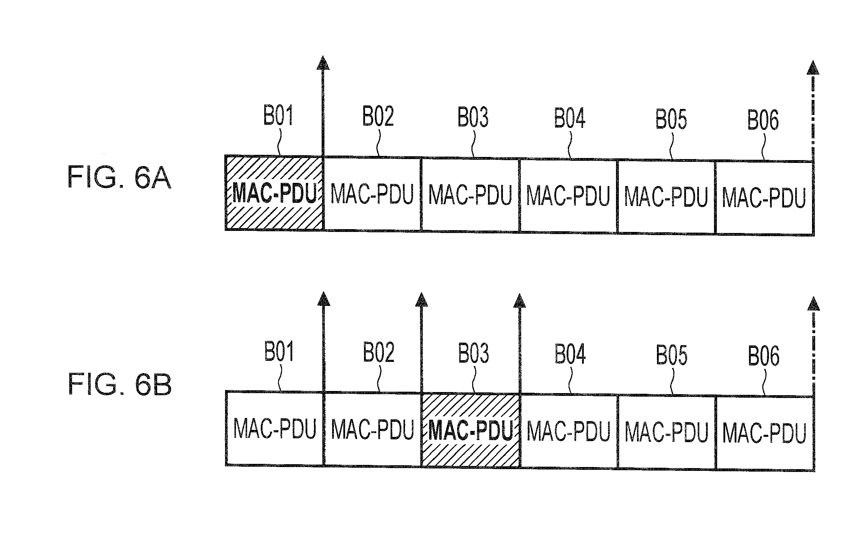

FIGs. 6A, 6B illustrate timings that the packet processor 2 executes the reception completion notification to the CPU 1. FIGs. 6A, 6B each illustrates burst data in a frame. In FIG. 6A, 6b, MAC-PDU is being transmitted to the packet processor 2 from the wireless processing unit 3 in the order of packets B01 to B06.

FIG. 6A illustrates the case where a control MAC-PDU exists in the packet B01 of the head of burst data. When the reception of the packet B01 from the wireless processing unit 3 is completed, the packet processor 2 executes the reception completion notification of the data of step S504 at the timing illustrated by the solid line arrow. In response to this, the CPU 1 requests that the packet processor 2 executes step S505. The packet processor 2 executes step S506 based on the request of the CPU 1. When the data transmitted from the packet processor 2 is analyzed and that the data is a control MAC-PDU is confirmed, the CPU 1 executes step S507. When the order of step S507 is received, the packet processor 2 stops executing the reception completion notification by the unit of MAC-PDU. Accordingly, the packet processor 2 does not execute the processing of step S504 even when reception of packet B02 to packet B05 is finished. Since packet B06 is the last MAC-PDU in the burst data, step S508 is executed at the timing when the packet processor 2 completes the reception of packet B06 illustrated by the dashed line arrow. In response to this, the CPU 1 requests that the packet processor 2 executes step S510. The packet processor 2 executes S510 based on the request from the CPU 1. In step S510, the packet processor 2 transmits the data of packet B02 to packet B06 to the CPU 1.

FIG. 6B illustrates the case where a control MAC-PDU exists in the third packet B03 of burst data. When the reception of the packet B01 from the wireless processing unit 3 is completed, the packet processor 2 executes a reception completion notification of data of step S504 at the timing illustrated by a solid line arrow. In response to this, the CPU 1 executes step S505 to the packet processor 2. The packet processor 2 executes step S506 based on the request from the CPU 1. When the CPU 1 analyzes the data transmitted from the packet processor 2 and confirms that that the data is not a control MAC-PDU, the CPU 1 waits a reception completion notification of the next packet B02 of step S 504. Since packet B02 is also not a MAC-PDU, the packet processor 2 and the CPU 1 execute the processing of step S504 to S506 in this order similarly to the case for packet B01. Since packet B03 is a control MAC-PDU, the packet processor 2 and the CPU 1 goes to the processing of step S507 after the processing of step S504 to step S506 is completed. Accordingly, the packet processor 2 does not execute step S504 even when packet B04 and packet B05 are received. Since the packet B06 is the last MAC-PDU in the burst data, step S508 is executed at the timing when the packet processor 2 completes the reception of packet B06 illustrated by the dashed line. In response to this, the CPU 1 executes step S 509 to the packet processor 2. The packet processor 2 executes S510 based on the request from the CPU 1. In step S510, the packet processor 2 transmits the data from packet B02 to packet B06 to the CPU 1.

With the structure, it becomes possible to change the unit of the data supplied to the upper layer device after a packet including control data is supplied to the upper layer device. Herewith, it becomes possible for a packet processing device and a communication device to make consideration of the load of the upper layer generated by supplying data to the upper layer device, and to transmit control data fast to the upper layer.

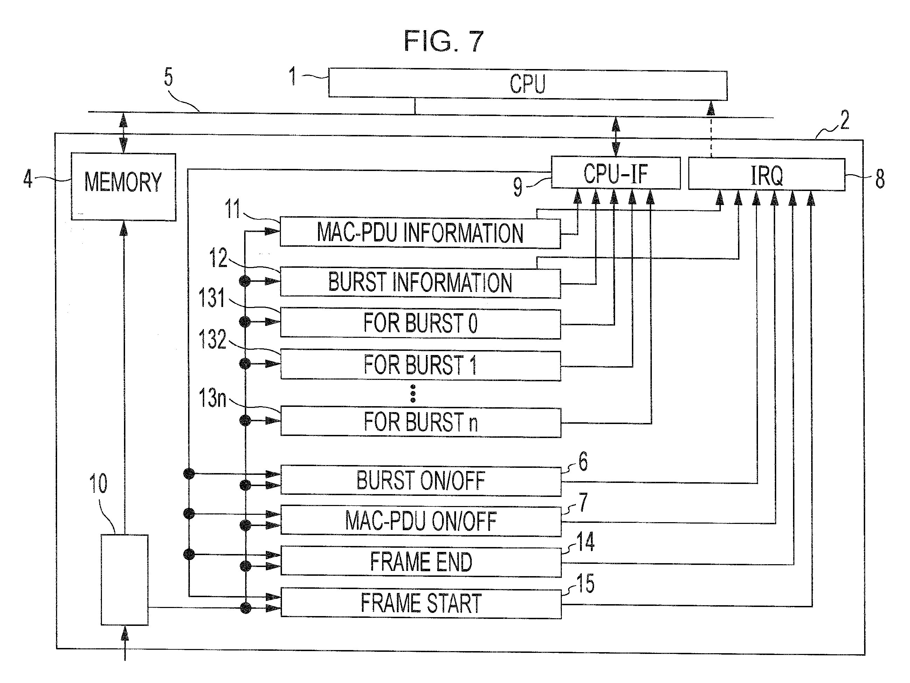

Hereinafter a second embodiment will be described with reference to FIG. 7 to FIG. 11.

### Structure of Packet Processing Device of Second Embodiment

The structure of a packet processing device of the second embodiment is illustrated in FIG. 7. In FIG. 7, reference numeral 1 denotes a controller (CPU), 2 denotes a packet processor, 4 denotes a memory, 5 denotes a bus, 6 denotes a burst notification control register, 7 denotes a MAC-PDU notification control register, 8 denotes an IRQ output controller, 9 denotes a CPU interface, 10 denotes a data controller, 11 denotes a valid MAC-PDU notification register, 12 denotes a valid burst notification register, 131, 132, 13n denote MAC-PDU information accumulation register, 14 denotes a frame end register, and 15 denotes a frame start register.

In the second embodiment, a reception data supply part includes the data controller 10, the burst notification control register 6, the MAC-PDU notification control register 7, the IRQ output controller 8, the CPU interface 9, the valid MAC-PDU notification register 11, the valid burst notification register 12, the MAC-PDU information accumulation registers 131, 132, 13n, the frame end register 14, and the frame start register 15. The receive data supply part receives a packet including data and a data block including a packet from the wireless processing unit 3 that is a lower layer device, and provides the packet obtained by a reception processing of the data block to the CPU that is an upper layer device.

### Bus

The bus 5 connects the CPU 1 and the packet processor 2, and transmits data from the packet processor 2 to the CPU 1.

### Packet Processing Unit

The packet processor 2 is equipped with the memory 4, the burst notification control register 6, the MAC-PDU notification control register 7, the IRQ output controller 8, the CPU interface 9, the data controller 10, the valid MAC-PDU notification register 11, the valid burst notification register 12, the MAC-PDU information accumulation registers 131, 132, ···13n, the frame end register 14, and the frame start register 15.

### Data Control Unit

The data controller 10 is connected with the memory 4, the burst notification control register 6, the MAC-PDU notification control register 7, the valid MAC-PDU notification register 11, the valid burst notification register 12, the MAC-PDU information accumulation registers 131, 132, ···13n, the frame end register 14, and the frame start register 15.

The data controller 10 receives the data of the frame from the wireless processing unit 3 (not illustrated), and stores the data in the memory 4. The data controller 10 receives the data of the frame and sets a flag indicative of which burst data includes a MAC-PDU that can be transferred to the valid MAC-PDU notification register 11. The data controller 10 receives the data of the frame and sets a flag indicative of which burst data can be transferred to the effective notification register 12.

The data controller 10 receives the data of the frame, and executes the writing processing of the following (1) to (4) to the MAC-PDU information accumulation registers 131, 132, ···13n corresponding to each burst in the frame.
(1) The data controller 10 executes writing of a reception state of MAC-PDU.
(2) The data controller 10 executes writing of a state of the burst notification control register 6.
(3) The data controller 10 executes writing of the cumulative number of the received MAC-PDU.
(4) The data controller 10 executes writing of the data length of the received burst data.

The data controller 10 receives the data of the frame, detects a cause of interrupt to the CPU 1, and writes various causes of interrupt to the burst notification control register 6, the MAC-PDU notification control register 7, the frame end register 14, and the frame start register 15. Specifically, the following operations of (1) to (4) are executed.
(1) When the packet processor 2 starts receiving of the frame, the data controller 10 executes writing to the frame start register 15.
(2) When the packet processor 2 finishes the reception of the frame, the data controller 10 executes writing to the frame end register 14.
(3) When the packet processor 2 completes the reception of MAC-PDU, the data controller 10 executes writing to the MAC-PDU notification control register 7.
(4) When the packet processor 2 completes the reception of the burst data, the data controller 10 executes writing to the burst notification control register 6.

### CPU Interface

The CPU interface 9 is connected with the bus 5, the burst notification control register 6, the MAC-PDU notification control register 7, the valid MAC-PDU notification register 11, the valid burst notification register 12, the MAC-PDU information accumulation registers 131, 132, ···13n, the frame end register 14, and the frame start register 15. The CPU interface 9 extracts data from the valid MAC-PDU notification register 11, the valid burst notification register 12, the MAC-PDU information accumulation registers 131, 132, ···13n, the frame end register 14, and the frame start register 15 corresponding to the request from the CPU 1, and transmits to the CPU 1 via the bus 5. Further, the CPU interface 9 receives interrupt mask requests from the CPU1, and writes control information for controlling the IRQ output controller 8 in the burst notification control register 6, the MAC-PDU notification control register 7, the frame end register 14, and the frame start register 15.

### IRQ Output Controller

The IRQ output controller 8 is connected with the bus 5, the burst notification control register 6, the MAC-PDU notification control register 7, the frame end register 14, the frame start register 15, the valid MAC-PDU notification register 11, and the valid burst notification register 12. The IRQ output controller 8 monitors the burst notification control register 6, the MAC-PDU notification control register 7, the frame end register 14, the frame start register 15, the valid MAC-PDU notification register 11, and the valid burst notification register 12, and executes an interrupt notification to the CPU 1 by using an interrupt request line when the state of each register is changed. The interrupt notification is executed when a frame is started, when reception of a MAC-PDU is completed, when reception of burst data is completed, and when the frame is ended.

### CPU

The CPU 1 is connected with the bus 5 and the IRQ output controller 8. The CPU 1 executes a reading processing of MAC-PDU data and burst data based on the notification from the interrupt request line. Further, the CPU 1 analyzes the read data, and transmits information for controlling the IRQ output controller 8 to the burst notification control register 6, the MAC-PDU notification control register 7, the frame end register 14, and the frame start register 15 via the CPU interface 9. Further, the CPI 1 reads out the data state of the frame described in the valid MAC-PDU notification register 11, the valid burst notification register 12, the MAC-PDU information accumulation registers 131, 132, ···13n via the CPU interface 9.

### Structure of MAC-PDU Information Accumulation Register

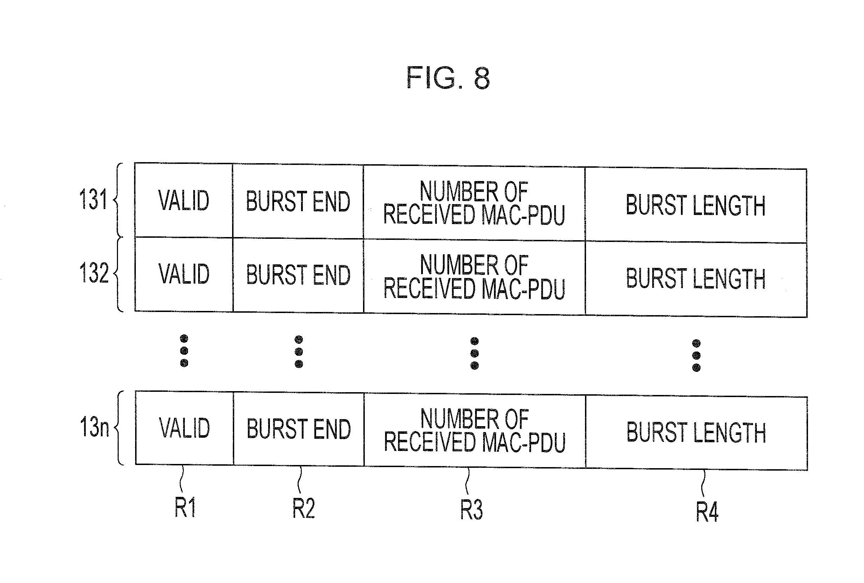

FIG. 8 illustrates the structure of MAC-PDU information accumulation registers 131, 132,···13n. The MAC-PDU information accumulation registers 131, 132, ···13n correspond to Burst 0 to Burst n of the burst data in the frame. There are fields of R1 to R4 for every burst data. The data controller 10 writes information in the fields of R1 to R4 in accordance with the state of the data received from the wireless processing unit 3.

### R1

R1 indicates a valid field. The valid field is set by the data controller 10. The valid field is set to "1" when the data controllers 10 receives the initial MAC-PDU of burst data and is set to "0" at the end of the frame.

### R2

R2 indicates a state field of the burst notification control register 6 for indicating the state of the burst notification control register 6. The field is set to "1" by the data controller 10 when a notification of a Burst Available interrupt of the burst notification control register 6 is made. When a Burst Available interrupt of the burst notification control register 6 is masked, polling of the state field R2 of the burst notification control register 6 by the CPU 1 allows knowing a reception completion of burst data without an interrupt notification from the IRQ output controller 8.

### R3

R3 is a reception MAC-PDU number storage field for storing the cumulative number of the MAC-PDU that has been received. When a burst data has been received, the data processing unit 10 stores the total number of MAC-PDU whose reception is completed in the field of R3. After the packet processor 2 notifies the CPU 1 of MAC-PDU possible interrupt, the CPU 1 confirms the table. Since there is a possibility that the number of reception MAC-PDU is increased, the CPU 1 confirms the actual number of MAC-PDU that can be received with the field. When the IRQ output controller 8 executes notification by a Burst Available interrupt, the field indicates the total number of the MAC-PDUs in the burst data.

### R4

R4 is an accumulation burst length storage field for storing the data length of received data of the burst data. When burst data is received, the data processing unit 10 stores the data length of the burst data in the field of R4. After the packet processor 2 notifies the CPU 1 by MAC-PDU possible interrupt, the CPU 1 confirms the field of R4. Since there is a possibility that the number of received MAC-PDU (accumulation burst length) increases, the packet processor 2 notifies CPU 1 of the length of the burst data of MAC-PDU which can be received by the field. When notification is made by a Burst Available interrupt, the field indicates the length of burst data of the entire burst.

### Structure of Valid MAC-PDU Notification Register

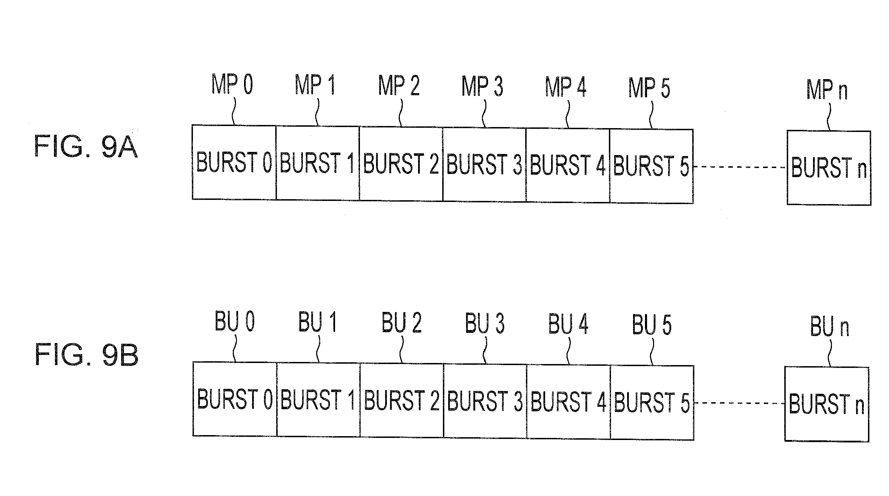

FIG. 9A illustrates the structure of the valid MAC-PDU notification register 11. The valid MAC-PDU notification register 11 has fields MP 0 to MP n corresponding to burst data (Burst 0) to (burst n). When a MAC-PDU which can be transferred to the CPU 1 is received for every burst data, the data controller 10 sets "1" in the field corresponding to the burst data. That is, the valid MAC-PDU notification register 11 stores that which burst contains received MAC-PDUs.

### Structure of Valid Burst Data Notification Register

FIG. 9B illustrates the structure of the valid burst notification register 12. The valid burst notification register 12 has fields BU 0 to BU n corresponding to burst data (Burst 0) to (Burst n). When all MAC-PDUs in burst data are received, the data controller 10 sets "1" in the field corresponding to the burst data.

### Structure of IRQ Notification Control Register

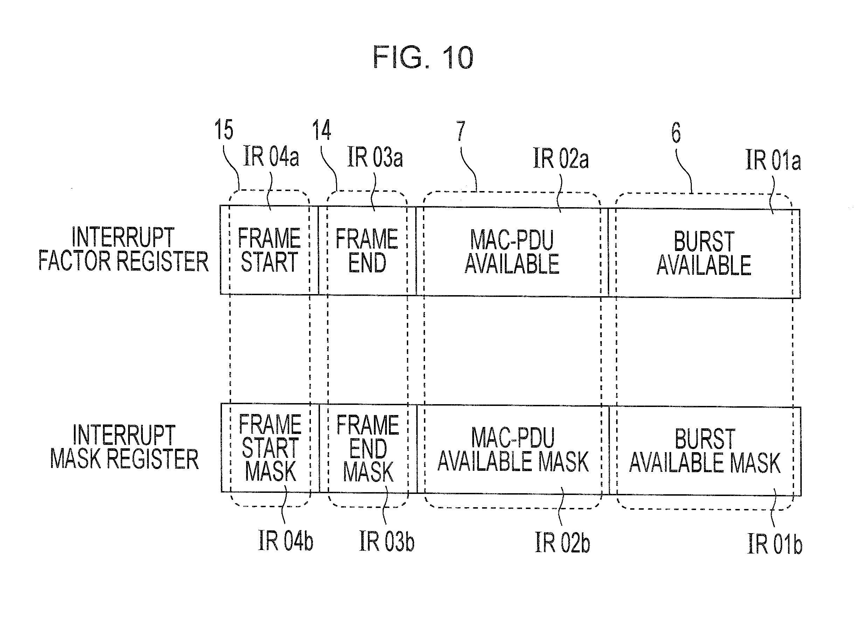

FIG. 10 illustrates the structure of the IRQ notification control register 8. The IRQ notification control register 8 is separated into an interrupt factor register (a) and an interrupt mask register (b). The IRQ notification control register 8 is equipped with Burst Available field IR0a MAC-PDU Available field IR02a, frame end field IR03a, frame start field IR04a, Burst Available mask field IR01b, MAC-PDU Available mask field IR02b, frame end mask field IR03b, and frame start mask field IR04b.

Burst Available field IR0a is a register for storing an interrupt factor of the burst notification control register 6 by the data controller 10. MAC-PDU Available field IR02a is a register for storing an interrupt factor of the MAC-PDU notification control register 7 by the data controller 10. The frame end filed IR03a is a register for storing an interrupt factor of the frame end register 14 by the data controller 10. The frame start field IR04a is a register for storing an interrupt factor of the frame start register 15 by the data controller 10.

Burst Available field IR01b is a register for storing an interrupt mask of the burst notification control register 6 by the data controller 10. MAC-PDU Available filed IR02b is a register for storing an interrupt mask of the MAC-PDU notification control register 7 by the data controller 10. Frame end field IR03b is a register for storing an interrupt mask of the frame end register 14 by the data controller 10. Frame start field IR04b is a register for storing an interrupt mask of the frame start register 14 by the data controller 10.

When the data controller 10 sets "1" in Burst Available field IR01a, the IRQ output controller 8 executes an interrupt to the CPU 1 by every burst. When the data controller 10 sets "1" in Burst Available field IR02a, the IRQ output controller 8 executes an interrupt to the CPU 1 by every MAC-PDU. When the data controller 10 sets "1" in frame end field IR03a, the IRQ output controller 8 executes an interrupt that the frame is ended to the CPU1. When the data controller 10 sets"1" in frame start field IR04a, the IRQ output controller 8 executes an interrupt that the frame is started to the CPU1.

When CPU 1 sets "1" in Burst Available mask field IR01b, the IRQ output controller 8 stops the interrupt by every burst to the CPU 1. When the CPU 1 sets "1" in MAC-PDU Available mask field IR02b, the IRQ output controller 8 stops the interrupt to the CPU 1 by every MAC-PDU. When CPU 1 sets "1" in frame end mask field IR03b, the IRQ output controller 8 stops the interrupt that the frame is ended to the CPU 1. When CPU 1 sets "1" in frame start mask field IR04b, the IRQ output controller 8 stops the interrupt that the frame is started to the CPU 1.

### Operation in Packet Processing Device of Second Embodiment

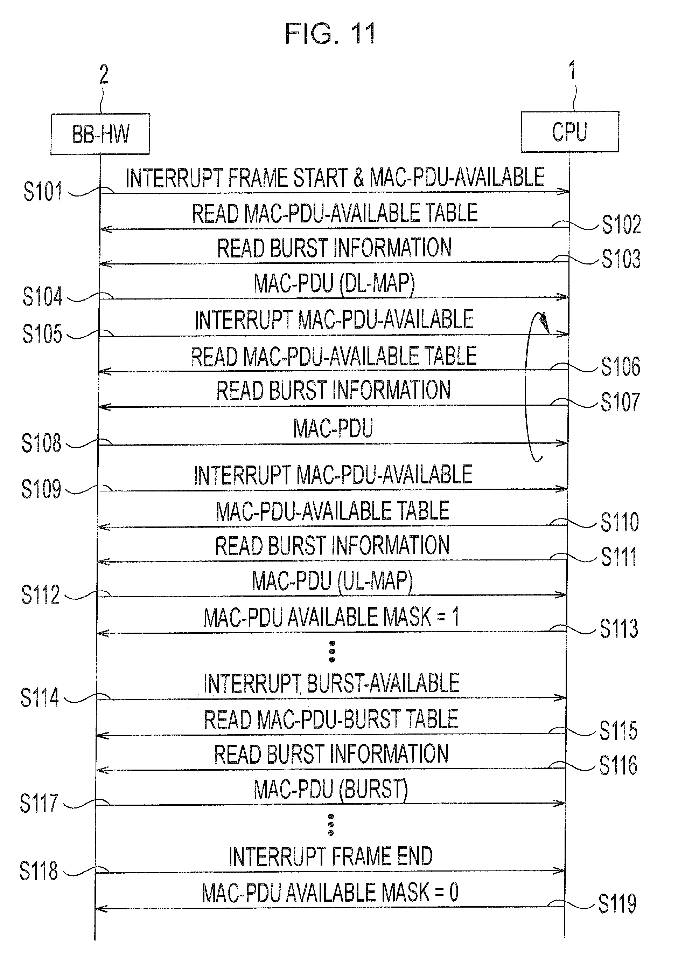

Transmission/reception of burst data between the CPU 1 and the packet processor 2 will be described below with reference to FIG. 11. FIG. 11 is a state transition diagram of communications between the CPU 1 and the packet processor 2.

In step S101, since the data controller 101 receives a frame and sets "1" in the field of IR04a, the IRQ output controller 8 issues an interrupt of frame start to the CPU 1. Further, since the data controller 10 sets "1" in the field of IR02a, the IRQ output controller 8 notifies the CPU 1 that a MAC-PDU can be received. In step S102, the CPU 1 confirms the content of the valid MAC-PDU notification register 11. Specifically, the CPU 1 confirms that a valid MAC-PDU exists in which burst data. In step S103, the CPU 1 reads MAC-PDU information accumulation register corresponding to the burst data confirmed in step S102, and confirms the number of valid MAC-PDU in the burst data or the received data size. In step S104, based on the order from the CPU 1, the packet processing device 2 transmits data to the CPU 1 from the memory 4 by the number of valid MAC-PDU or received data size. A DL-MAP is transferred to CPU lin the step S104 by the packet processor 2 as the first data of each frame, because the embodiment can handle the DL-MAP as a MAC-PDU as well.

In step S105, the data controller 10 sets "1" in the field of IR02a to notify the CPU 1 that the IRQ output controller 8 can receive a MAC-PDU. In step S106, the CPU 1 confirms the content of the valid MAC-PDU notification register 11. Specifically, the CPU 1 confirms that a valid MAC-PDU exists in which burst data. In step S107, the CPU 1 reads the MAC-PDU information accumulation register corresponding to the burst data confirmed in step S106, and confirms the number of valid MAC-PDU in the burst data or the received data size. In step S108, based on the order from the CPU 1, the packet processing device 2 transmits data to the CPU 1 by the number of the valid MAC-PDU or the received data size. The processing of step S105 to S108 is repeated until a UL-MAP which is a type of a control MAC-PDU is found in a MAC-PDU.

In step S109, the data controller 10 sets "1" in the field of IR02a to notify the CPU 1 that the IRQ output controller 8 can receive a MAC-PDU. In step S110, the CPU 1 confirms the content of the valid MAC-PDU notification register 11. Specifically, the CPU 1 confirms that a valid MAC-PDU exists in which burst data. In step S111, the CPU 1 reads the MAC-PDU information accumulation register corresponding to the burst data confirmed in step S110, and confirms the number of valid MAC-PDU in the burst data or the received data size. In step S112, based on the order from the CPU 1, the packet processing device 2 transmits data to the CPU 1 from the memory 4 by the number of valid MAC-PDU or the received data size. Herein, the data transmitted to the CPU 1 includes a UL-MAP.

In step S113, the CPU 1 sets "1" in the field of IR02b of the burst notification control register 6. Herewith, the IRQ output controller 8 stops executing an interrupt to the CPU 1 by the unit of MAC-PDU.

In step S114, since the data controller 10 sets "1" in the field of IR01a, the IRQ output controller 8 notifies the CPU 1 that burst data can be received. In step S115, the CPU 1 confirms the content of the valid burst notification register 12. Specifically, the CPU 1 confirms that a valid MAC-PDU exists in which burst data. In step S116, the CPU 1 reads the MAC-PDU information accumulation register corresponding to the burst data confirmed in step S115, and confirms the number of valid MAC-PDU in the burst data or the received data size. In step S117, based on the order from the CPU 1, the packet processing device 2 transmits data to the CPU 1 from the memory 4 by the number of valid MAC-PDU or the received data size. The processing of step S114 to step S117 is repeated for every burst data in the frame.

In step S118, when transmission of the last burst data to the CPU 1 is finished, the packet processing device 2 sets "1" in the field IR03a of the frame end register 14 in order to inform that the frame is finished. When "1" is set in the field IR03a of the frame end register 14, the IRQ output controller 8 issues a frame end interrupt to the CPU 1. In step S119, the CPU 1 sets the field of IR02b in the MAC-PDU notification control register 7 of the packet processing device 2 to "0".

With the above structure, it becomes possible to change the unit of the data supplied to the upper layer device after a packet including control data is supplied to the upper layer device. Herewith, in the packet processing device or the communication device, it becomes possible to make consideration of the load of the upper layer device generated by supplying data to the upper layer device, and to transmit the control data fast to the upper layer device.

The above described embodiments disclose the following invention. The following invention can be arbitrarily combined as needed.

## Claims

1. A packet processing device for controlling a frame having a plurality of data blocks including a plurality of packets constituted by a control packet including control data or a data packet including data, the packet processing device comprising:
a packet processor for receiving the frame and accumulating the frame; and
a controller for processing the packet transmitted from the packet processor, wherein
the packet processor transmits data to the controller at a timing when the packet is finished till the control packet is received, and the packet processor transmits the data at a timing when the data block is finished after the control packet is received.

2. The packet processing device according to claim 1, wherein
the packet processor switches data transmission of a packet and data transmission of a data block based on a requirement from the controller.

3. The packet processing device according to claim 1, wherein
the packet processor stores that which data block in the frame is received when data is received by the data block from an external part.

4. The packet processing device according to claim 1, wherein
the packet processing device stores the number of the received packet when the data block is received from an external part.

5. The packet processing device according to claim 1, wherein
the packet processor stores a data length of the data block when the data block is received from an external part.

6. A frame control method of a packet processing device including a packet processor for receiving a frame including a plurality of packets and for storing the frame and a controller for processing the packet transmitted from the packet processor, wherein
the packet processor receives the frame having a plurality of data blocks including a plurality of packets constituted by a control packet including control data or a data packet including data,
the packet processor transmits data to the controller at a timing when the packet is finished till the control packet is received, and
the packet processor transmits data at a timing when the data block is finished after the control packet is received.

7. The frame control method according to claim 6, wherein
the packet processor switches data transmission of a packet and data transmission of a data block based on a requirement from the controller.

8. A communication device that receives a data block including a packet including control data required for a transmission control and another packet and provides the packet obtained by a receiving processing of the data block to an upper layer device, the communication device comprising:
a reception data supply unit that changes a unit of data that is supplied to the upper layer device after a packet including the control data is supplied to the upper layer device.

9. The communication device according to claim 8, wherein
the reception data supply unit changes a supply unit of data that is supplied to the upper layer device so that the supply unit becomes larger when the unit of the data that is supplied to the upper layer device is changed.

10. The communication device according to claim 8, wherein
supply of data is executed by the data block before the unit of the data that is supplied to the upper layer device is changed, and supply of data is executed by a unit of the data block after the unit of the data is changed.

11. The communication device according to claim 8, wherein
the control data includes a transmission timing of a terminal and specification information of a channel.
